(19) Europäisches Patentamt
European Patent Office
Office européen des brevets

(11) **EP 3 750 708 A1**

(12) **EUROPEAN PATENT APPLICATION**

(43) Date of publication:
**16.12.2020  Bulletin 2020/51**

(51) Int Cl.:
***B32B 33/00*** (2006.01)   ***B32B 37/14*** (2006.01)
***B32B 37/08*** (2006.01)

(21) Application number: **19179258.9**

(22) Date of filing: **10.06.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **SABIC Global Technologies B.V.
4612 PX Bergen op Zoom (NL)**

(72) Inventors:
• **SHI, Huajie
4612 PX Bergen op Zoom (NL)**
• **YALDIZ, Recep
4612 PX Bergen op Zoom (NL)**
• **MUHAMMAD, Kashif Syed
4612 PX Bergen op Zoom (NL)**
• **VERLAEK, Roel
4612 PX Bergen op Zoom (NL)**
• **RIETMAN, Albert Dirk
4612 PX Bergen op Zoom (NL)**

(74) Representative: **J A Kemp LLP
14 South Square
Gray's Inn
London WC1R 5JJ (GB)**

(54) **FLAT, ASYMMETRIC FIBER-REINFORCED LAMINATES AND METHODS OF MAKING THE SAME**

(57)     A method of making a fiber-reinforced laminate includes stacking two or more laminae, at least one of which comprises fibers dispersed within a matrix material, and consolidating the stack of laminae to produce the laminate. The laminae can be stacked such that the laminate is asymmetric. The stack of laminae can be consolidated at least by heating the stack and cooling the stack such that, during the cooling, heat is transferred through a first surface of the stack at a first rate and heat is transferred through the second surface at a second rate that is less than or equal to 90% of the first rate. In some methods the stack can be disposed between first and second supportive bodies having different coefficients of thermal expansion and can be consolidated at least by pressing the supportive bodies between pressing elements of a press.

**FIG. 1A**

EP 3 750 708 A1

**Description**

**TECHNICAL FIELD**

The present invention relates generally to fiber-reinforced composites and, more specifically, to asymmetric fiber-reinforced laminates that are flat and methods of making the same.

**BACKGROUND**

Fiber-reinforced composites can be used to form structures having advantageous structural characteristics, such as high strengths and high stiffnesses, as well as relatively low weights, when compared to structures formed from conventional materials. As a result, fiber-reinforced composites are used in a wide variety of applications across a wide range of industries, including the automotive, aerospace, and consumer electronics industries.

An asymmetric fiber-reinforced laminate is a laminate that, due at least in part to the arrangement and composition of its laminae, has an effective coefficient of thermal expansion (CTE) $\alpha_l$ that is not equal across the midplane of the laminate. Asymmetric laminates may have certain advantages over symmetric laminates. For example, because fiber-reinforced laminae may have poor aesthetics, including a fiberless lamina to define an outer surface of the fiber-reinforced laminate-which can render the laminate asymmetric-may improve the appearance thereof. Asymmetric laminates may also experience less warpage during overmolding, compared to conventional laminates. However, a conventional asymmetric laminate generally is not flat because, due at least in part to the laminate's varying CTE, the laminate-forming process may induce residual stresses that tend to warp the laminate. Laminates that are not flat are typically difficult to handle in subsequent processes and, as such, asymmetric laminates are generally avoided, even if the asymmetric laminate may have other advantageous characteristics. As such, there is a need in the art for flat, asymmetric laminates that are suitable for use in subsequent processes and methods of making the same.

**SUMMARY**

The present methods of making a fiber-reinforced laminate address this need in the art at least by producing an asymmetric laminate in a manner that can mitigate warpage-inducing stresses attributable to the asymmetric configuration of its laminae. Some methods comprise stacking two or more laminae, wherein at least one of the laminae comprises fibers dispersed within a matrix material, and consolidating the stack to produce a laminate at least by heating and cooling stack. The laminae can be stacked such that the laminate is asymmetric, e.g., such that an upper one of the laminae defines a first surface, a lower one of the laminae defines a second surface opposite the first surface, and at least one of an effective lengthwise CTE ($\alpha_{l,x}$), an effective widthwise CTE ($\alpha_{l,y}$), and an effective shear CTE ($\alpha_{l,xy}$) of the laminate is higher at the first surface than at the second surface. When the stack of laminae is cooled, heat can be transferred through the first surface at a first rate and heat can be transferred through the second surface at a second rate that is less than or equal to 90% of the first rate. Such asymmetric cooling can induce residual stresses that at least partially counteract those attributable to the asymmetric configuration of laminae, thereby mitigating warpage.

Additionally or alternatively, the stack can be disposed between first and second supportive bodies such that the first supportive body contacts the first surface and the second supportive body contacts the second surface, wherein the first supportive body has a CTE that is less than or equal to 90% of a CTE of the second supportive body. As a result, during cooling, the second supportive body may shrink more than the first supportive body, which can also at least partially counteract stresses attributable to the asymmetric configuration of laminae. In this manner, asymmetric, fiber-reinforced laminates produced according to some of the present methods can be flat and suitable for use in subsequent manufacturing processes.

Some of the present methods of making a fiber-reinforced laminate comprise stacking two or more laminae such that an upper one of the laminae defines a first surface of the laminae and a lower one of the laminae defines a second surface of the laminate that is opposite the first surface. Stacking, in some methods, is performed such that the laminate is asymmetric, optionally wherein the laminate has a length and a width and at least one of an effective lengthwise coefficient of thermal expansion (CTE), an effective widthwise CTE, and an effective shear CTE-optionally effective lengthwise and widthwise CTEs-of the laminate is higher at the first surface than at the second surface. In some methods, stacking is performed such that an effective shear CTE of the laminate is substantially the same at the first and second surfaces.

In some methods, at least one of the laminae comprises fibers dispersed within a matrix material, optionally wherein the two or more laminae comprise one or more first laminae, at least 90%, by weight, of each of the first lamina(e) being a matrix material, and one or more second laminae, each comprising fibers dispersed within a matrix material. In some methods, stacking is performed such that each of the first lamina(e) is disposed closer to the first surface than to the second surface and/or each of the second lamina(e) is disposed closer to the second surface than is each of the first lamina(e). One of the first lamina(e), in some methods, defines the first surface. In some methods, the one or more second laminae comprise two or more second laminae, wherein, optionally, each of the second laminae is a unidirectional lamina and/or stacking is performed such that the fibers of at least one of the second laminae are aligned in a first direction and the fibers of at least one other of the second laminae are aligned in a second direction that is perpendicular to the first direction.

Some methods comprise consolidating the stack of laminae to produce the laminate at least by heating the stack and cooling the stack. Some methods comprise disposing the stack between first and second supportive bodies such that the first supportive body contacts the first surface and the second supportive body contacts the second surface and, in some of such methods, consolidating the stack comprises pressing the supportive bodies between first and second pressing elements of a press. In some methods, cooling the stack is performed such that, during the cooling, heat is transferred through the first surface at a first rate and heat is transferred through the second surface at a second rate that is less than or equal to 90% of the first rate. During cooling of the stack, in some methods, a temperature of the first pressing element is less than or equal to 90% of a temperature of the second pressing element.

In some methods, a thermal diffusivity of the second supportive body is less than or equal to 90% of a thermal diffusivity of the first supportive body and/or the first supportive body has a coefficient of thermal expansion (CTE) that is less than or equal to 90% of a CTE of the second supportive body. In some methods, the first supportive body is a first plate and/or the second supportive body is a layer a polymeric material. In some of such methods, during pressing of the supportive bodies, a second plate underlies the second supportive body such that the first and second plates are pressed between the first and second pressing elements. In some methods, pressing the supportive bodies is performed such that the first supportive body is disposed closer to the first pressing element than is the second supportive body. In some methods, at least a majority, by weight, of each of the first and second plates is steel, fibers are dispersed within the polymeric material of the second supportive body, and/or the polymeric material is polytetrafluoroethylene.

Some of the present fiber-reinforced laminates comprise two or more laminae, at least one of the laminae comprising fibers dispersed within a matrix material, wherein the laminate is asymmetric and flat. Some laminates comprise opposing first and second surfaces and, optionally, effective lengthwise and widthwise CTEs of the laminate are higher at the first surface than at the second surface and/or an effective shear CTE of the laminate is substantially the same at the first and second surfaces. In some laminates, the two or more laminae comprise one or more first laminae, wherein at least 90%, by weight, of each of the first lamina(e) is a matrix material, and one or more second laminae, each comprising fibers dispersed within a matrix material. One of the first lamina(e), in some laminates, defines the first surface.

The term "coupled" is defined as connected, although not necessarily directly, and not necessarily mechanically; two items that are "coupled" may be unitary with each other. The terms "a" and "an" are defined as one or more unless this disclosure explicitly requires otherwise. The term "substantially" is defined as largely but not necessarily wholly what is specified (and includes what is specified; e.g., substantially 90 degrees includes 90 degrees and substantially parallel includes parallel), as understood by a person of ordinary skill in the art. In any disclosed embodiment, the terms "substantially" and "approximately" may be substituted with "within [a percentage] of" what is specified, where the percentage includes 0.1, 1, 5, and 10 percent.

The phrase "and/or" means and or or. To illustrate, A, B, and/or C includes: A alone, B alone, C alone, a combination of A and B, a combination of A and C, a combination of B and C, or a combination of A, B, and C. In other words, "and/or" operates as an inclusive or.

Further, a device or system that is configured in a certain way is configured in at least that way, but it can also be configured in other ways than those specifically described.

The terms "comprise" (and any form of comprise, such as "comprises" and "comprising"), "have" (and any form of have, such as "has" and "having"), and "include" (and any form of include, such as "includes" and "including") are open-ended linking verbs. As a result, an apparatus that "comprises," "has," or "includes" one or more elements possesses those one or more elements, but is not limited to possessing only those one or more elements. Likewise, a method that "comprises," "has," or "includes" one or more steps possesses those one or more steps, but is not limited to possessing only those one or more steps.

Any embodiment of any of the apparatuses, systems, and methods can consist of or consist essentially of - rather than comprise/have/include - any of the described steps, elements, and/or features. Thus, in any of the claims, the term "consisting of" or "consisting essentially of" can be substituted for any of the open-ended linking verbs recited above, in order to change the scope of a given claim from what it would otherwise be using the open-ended linking verb.

The feature or features of one embodiment may be applied to other embodiments, even though not described or illustrated, unless expressly prohibited by this disclosure or the nature of the embodiments.

Some details associated with the embodiments are described above, and others are described below.

## BRIEF DESCRIPTION OF THE DRAWINGS

The following drawings illustrate by way of example and not limitation. For the sake of brevity and clarity, every feature of a given structure is not always labeled in every figure in which that structure appears. Identical reference numbers do not necessarily indicate an identical structure. Rather, the same reference number may be used to indicate a similar feature or a feature with similar functionality, as may non-identical reference numbers.

FIGs. **1A** and **1B** are upper and lower views, respectively, of an example asymmetric laminate.
FIG. **1C** is a cross-sectional view of the laminate of FIG. 1A, taken along line 1C-1C of FIG. 1A.
FIG. **1D** is an exploded view of the laminate of FIG. 1A.
FIG. **2** illustrates an example procedure by which the effective coefficient of thermal expansion of a laminate ($\alpha_l$) can be determined.
FIG. **3A** illustrates stacking of two or more laminae according to various example methods.
FIG. **3B** is a side view of a stack of the laminae of FIG. 3A disposed between first and second supportive bodies that have different CTEs.
FIG. **3C** is a side view of the stack of the laminae of FIG. 3A being consolidated in a press while disposed between the first and second supportive bodies.
FIGs. **4A** and **4B** show an asymmetric laminate that was produced according to a conventional process. The laminate shown in FIGs. 4A and 4B was warped.
FIGs. **4C** and **4D** show an asymmetric laminate that was produced according to one of the present methods. The laminate shown in FIGs. 4C and 4D was flat.

## DETAILED DESCRIPTION

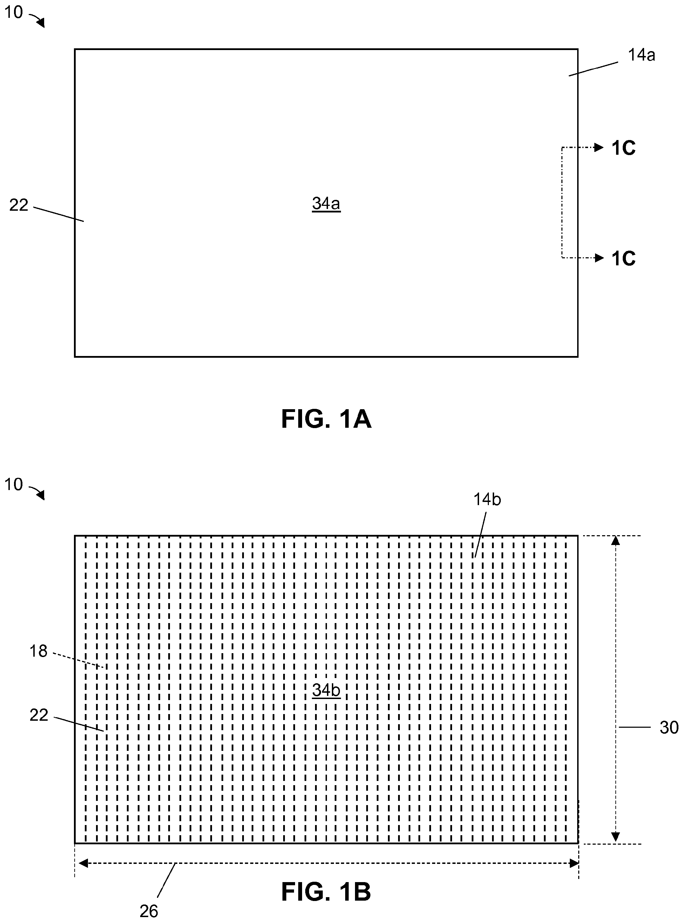

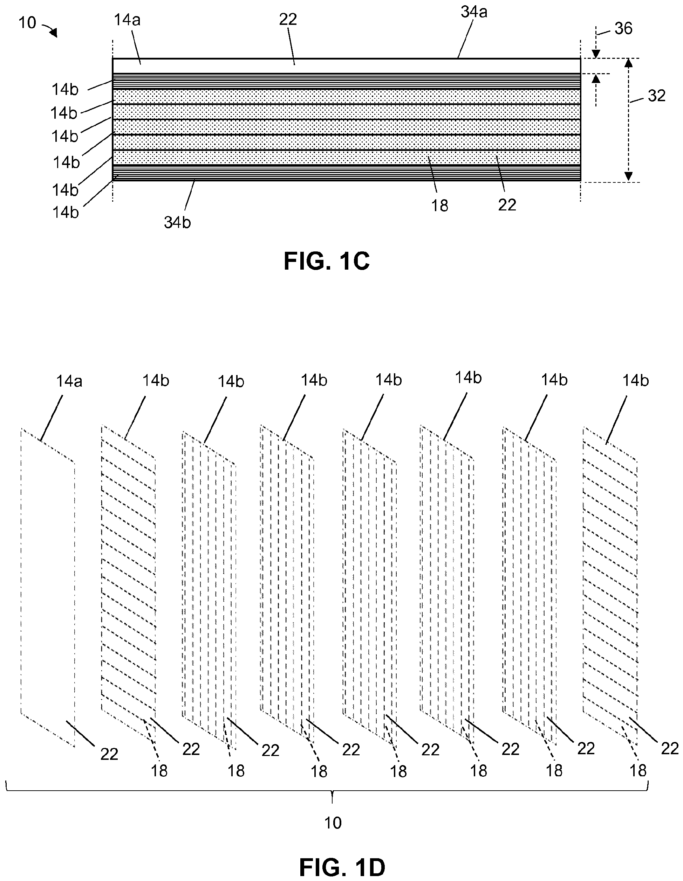

Referring to FIGs. 1A-1D, shown is an asymmetric fiber-reinforced laminate 10. Laminate 10 can comprise two or more laminae, where at least one of the laminae comprises fibers dispersed within a matrix material. To illustrate, laminate 10 can comprise one or more first laminae 14a, each comprising a matrix material 22 with little or no fibers dispersed therein (e.g., such that at least 90%, by weight, of the lamina is due to the matrix material) (e.g., a sheet or film of the matrix material), and one or more second laminae 14b, each comprising fibers 18 (e.g., continuous fibers) dispersed within a matrix material 22. In other embodiments, however, laminate 10 need not include first lamina(e) 14a; in other words, each of the laminae can include fibers.

Fibers 18 of any of second lamina(e) 14b can include any suitable fibers, such as, for example, glass fibers, carbon fibers, aramid fibers, polyethylene fibers, polyester fibers, polyamide fibers, ceramic fibers, basalt fibers, steel fibers, and/or the like. Provided by way of illustration, at least one of (up to and including each of) second lamina(e) 14b can have a pre-consolidation fiber volume fraction that is greater than or equal to any one of, or between any two of: 40%, 45%, 50%, 55%, 60%, 65%, 70%, 75%, or 80%. And matrix material 22 of any of the laminae-including first and second laminae, 14a and 14b, respectively-can be a thermoplastic or thermoset material. Suitable thermoplastic matrix materials include, for example, polyethylene terephthalate, polycarbonate (PC), polybutylene terephthalate (PBT), poly(1,4-cyclohexylidene cyclohexane-1,4-dicarboxylate) (PCCD), glycol-modified polycyclohexyl terephthalate (PCTG), poly(phenylene oxide) (PPO), polypropylene (PP), polyethylene (PE), polyvinyl chloride (PVC), polystyrene (PS), polymethyl methacrylate (PMMA), polyethyleneimine or polyetherimide (PEI) or a derivative thereof, a thermoplastic elastomer (TPE), a terephthalic acid (TPA) elastomer, poly(cyclohexanedimethylene terephthalate) (PCT), polyethylene naphthalate (PEN), a polyamide (PA), polystyrene sulfonate (PSS), polyether ether ketone (PEEK), polyether ketone ketone (PEKK), acrylonitrile butyldiene styrene (ABS), polyphenylene sulfide (PPS), a copolymer thereof, or a blend thereof. Suitable thermoset matrix materials include, for example, an unsaturated polyester resin, a polyurethane, bakelite, duroplast, urea-formaldehyde, diallyl-phthalate, epoxy resin, an epoxy vinylester, a polyimide, a cyanate ester of a polycyanurate, dicyclopentadiene, a phenolic, a benzoxazine, a co-polymer thereof, or a blend thereof.

For each of second lamina(e) 14b, fibers 18 can be arranged in any suitable configuration. For example, the lamina can be a unidirectional lamina (e.g., a unidirectional tape) in which substantially all of the fibers are aligned with a single direction. As used herein, "aligned with" means within 10 degrees of parallel to. For further example, the lamina can be a woven lamina, such as one in which continuous fibers are arranged in a plane, twill, satin, basket, leno, mock leno, or the like weave. For yet further example, the lamina can be a non-woven lamina (e.g., dry-laid, wet-laid, spunmelt, or the like), in which the fibers are multi-directional, arranged in a sheet or web, and connected to one another via entanglement and/or thermal and/or chemical bonds rather than in a weave or knit.

Further, for any of second lamina(e) 14b (that are not non-woven), fibers 18 can be aligned with any suitable direction(s) (hereinafter, "fiber direction(s)"). Provided by way of illustration, laminate 10 can have a length 26 measured in a first direction, and a width 30 measured in a second direction that is perpendicular to the first direction (FIG. 1B). At least some of the fibers can be aligned with length 26 and/or at least some of the fibers can be aligned with width 30.

If the lamina is a unidirectional lamina, in the former instance it is a 0-degree unidirectional lamina, and in the latter instance it is a 90-degree unidirectional lamina. Alternatively or additionally, at least some of the fibers can be aligned with a direction that is angularly disposed relative to each of length 26 and width 30; such a lamina can be characterized as an off-axis lamina. To illustrate, a smallest angle between a direction in which at least some of the fibers are aligned and length 26 can be equal to any one of, or between any two of: 5°, 10°, 15°, 20°, 25°, 30°, 35°, 40°, 45°, 50°, 55°, 60°, 65°, 70°, 75°, 80°, 85°, or more (e.g., 45 degrees).

Length 26 and width 30 of laminate 10 can be the same or different; for example, the width can be less than or equal to any one of, or between any two of: 90%, 80%, 70%, 60%, 50%, 40%, or 30% of the length. A thickness 32 (FIG. 1C) of laminate 10, measured perpendicularly to both length 26 and width 30, can be less than or equal to any one of, or between any two of: 2.0 mm, 1.9 mm, 1.8 mm, 1.7 mm, 1.6 mm, 1.5 mm, 1.4 mm, 1.3 mm, 1.2 mm, 1.1 mm, 1.0 mm, 0.9 mm, 0.8 mm, 0.7 mm, 0.6 mm, or 0.5 mm. And a pre-consolidation thickness (e.g., corresponding to post-consolidation thickness 36) of each of the laminate's laminae (e.g., 14a and 14b) can be less than or equal to any one of, or between any two of: 0.50, 0.45, 0.40, 0.35, 0.30, 0.20, 0.15, 0.10, or 0.05 mm.

Some laminates can include one or more laminae comprising foam (e.g., open- or closed-cell), a honeycomb structure, and/or the like. Such laminates can be, for example, skin-core, ABA, sandwich, and/or the like laminates.

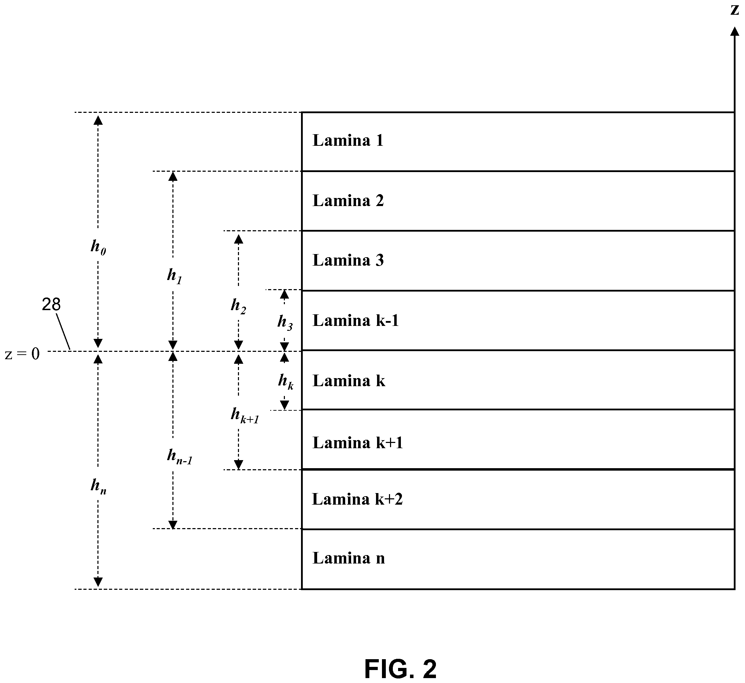

The laminae can be arranged such that laminate 10 is asymmetric. An asymmetric laminate is one in which the arrangement and pre-consolidation properties of the laminae render the laminate susceptible to warpage when the temperature of the laminate changes, e.g., one in which an effective coefficient of thermal expansion (CTE) ($\alpha_l$) of the laminate is not equal across the midplane thereof. Referring to FIG. 2, that effective CTE can be expressed as:

$$\alpha_l = \begin{bmatrix} \alpha_{l,x} \\ \alpha_{l,y} \\ \alpha_{l,xy} \end{bmatrix} = \frac{1}{\Delta T}\left(\varepsilon^0 + z\mathbf{k}\right) \tag{1}$$

where z is the distance from midplane 28 of the laminate and $\varepsilon^0$ and k are the midplane strain and curvature vectors, respectively, for a change in temperature $\Delta T$:

$$\frac{1}{\Delta T}\begin{bmatrix} \varepsilon^0 \\ \mathbf{k} \end{bmatrix} = \begin{bmatrix} \mathbf{A} & \mathbf{B} \\ \mathbf{B} & \mathbf{D} \end{bmatrix}^{-1}\left(\frac{1}{\Delta T}\begin{bmatrix} \mathbf{N} \\ \mathbf{M} \end{bmatrix}\right) \tag{2}$$

As reflected in Eq. (1), $\alpha_l$ can vary across the thickness of the laminate (e.g., in the z-direction), and the effective lengthwise CTE ($\alpha_{l,x}$) can be different from the effective widthwise CTE ($\alpha_{l,y}$) and/or the effective shear CTE ($\alpha_{l,xy}$) (e.g., due to the anisotropy of the fiber-reinforced lamina(e)). An effective z-direction CTE ($\alpha_{l,z}$) can also vary across the thickness of an asymmetric laminate. In Eq. (2), as calculated based on pre-consolidation properties of the laminae, **A** is the extensional stiffness matrix of the laminate:

$$\mathbf{A} = \sum_{k=1}^{n} \overline{\mathbf{Q}}_{\mathbf{k}}(h_k - h_{k-1}) \tag{3}$$

**B** is the coupling stiffness matrix of the laminate:

$$\mathbf{B} = \frac{1}{2}\sum_{k=1}^{n} \overline{\mathbf{Q}}_{k}(h_k^2 - h_{k-1}^2) \tag{4}$$

**D** is the bending stiffness of the laminate:

$$\mathbf{D} = \frac{1}{3}\sum_{k=1}^{n} \overline{\mathbf{Q}}_{k}(h_k^3 - h_{k-1}^3) \tag{5}$$

and **N** and **M** are thermal stress and moment resultants, respectively, for the change in temperature $\Delta T$:

$$\frac{\mathbf{N}}{\Delta T} = \sum_{k=1}^{n} \overline{\mathbf{Q}}_{\mathbf{k}} \overline{\alpha}_k (h_k - h_{k-1}) \tag{6}$$

$$\frac{\mathbf{M}}{\Delta T} = \frac{1}{2} \sum_{k=1}^{n} \overline{\mathbf{Q}}_k \overline{\alpha}_k (h_k^2 - h_{k-1}^2) \tag{7}$$

FIG. 2 illustrates the manner in which these relationships can be determined for a laminate having $n$ laminae. In Eqs. (3)-(7), for the kth lamina, $\overline{\mathbf{Q}}_k$ is the lamina's transformed stiffness matrix, $\overline{\alpha_k}$ is the lamina's transformed CTE vector, and $h_k$ and $h_{k-1}$ are the distances between the geometric midplane of the laminate and the lamina's lower and upper surfaces, respectively. The coordinate system used in these relationships can be chosen such that the length (e.g., 26) of the laminate is in the x-direction (e.g., the first direction), and the width of the laminate (e.g., 30) is in the y-direction (e.g., the second direction). The transformed stiffness matrix $\overline{\mathbf{Q}}_k$ and transformed CTE vector $\overline{\alpha_k}$ express the stiffness and CTEs, respectively, of the lamina in this x-y reference frame. For an anisotropic lamina (e.g., one of second lamina(e) 14b) whose properties are known with respect to different coordinates (e.g., with respect to the fiber direction and a direction transverse to the fiber direction, when the lamina is a 90-degree or off-axis unidirectional lamina), the known $\mathbf{Q}_{\mathbf{k}}$ and $\alpha_{\mathbf{k}}$ can be transformed to determine $\overline{\mathbf{Q}}_{\mathbf{k}}$ and $\overline{\alpha_k}$:

$$\overline{\mathbf{Q}}_k = \mathbf{T}^{-1} \mathbf{Q}_k \mathbf{R} \mathbf{T} \tag{8}$$

$$\overline{\alpha}_k = \begin{bmatrix} \alpha_x \\ \alpha_y \\ \alpha_{xy} \end{bmatrix}_k = \mathbf{R} \mathbf{T}^{-1} \mathbf{R}^{-1} \alpha_k \tag{9}$$

where $\mathbf{R}$ is the Reuter's matrix:

$$\mathbf{R} = \begin{bmatrix} 1 & 0 & 0 \\ 0 & 1 & 0 \\ 0 & 0 & 2 \end{bmatrix} \tag{10}$$

and $\mathbf{T}$ is the transformation matrix for a transformation angle $\theta$ (e.g., the angle between the fiber direction and the x-axis):

$$\mathbf{T} = \begin{bmatrix} \cos^2 \theta & \sin^2 \theta & 2 \sin \theta \cos \theta \\ \sin^2 \theta & \cos^2 \theta & -2 \sin \theta \cos \theta \\ -\sin \theta \cos \theta & \sin \theta \cos \theta & \cos^2 \theta - \sin^2 \theta \end{bmatrix} \tag{11}$$

For an anisotropic lamina that is, or can be approximated as, transversely isotropic (e.g., a unidirectional lamina):

$$\mathbf{Q}_k = \begin{bmatrix} \dfrac{E_1}{1 - \nu_{12}\nu_{21}} & \dfrac{\nu_{21} E_1}{1 - \nu_{12}\nu_{21}} & 0 \\ \dfrac{\nu_{12} E_2}{1 - \nu_{12}\nu_{21}} & \dfrac{E_2}{1 - \nu_{12}\nu_{21}} & 0 \\ 0 & 0 & \dfrac{1}{G_{12}} \end{bmatrix}_k \tag{12}$$

$$\alpha_k = \begin{bmatrix} \alpha_1 \\ \alpha_2 \\ 0 \end{bmatrix}_k \tag{13}$$

In Eqs. (12) and (13), $E_1$ and $\alpha_1$ are the lamina's pre-consolidation Young's modulus and CTE, respectively, in a longitudinal direction (e.g., the fiber direction), and $E_2$ and $\alpha_2$ are the lamina's pre-consolidation Young's modulus and CTE, respectively, in a transverse direction. The parameters $v_{12}$ and $v_{21}$ are the major and minor Poisson's ratios, respectively, and $G_{12}$ is the shear modulus. For an isotropic lamina (e.g., one of first lamina(e) 14a):

$$\overline{\mathbf{Q}}_k = \mathbf{Q}_k = \left( \frac{E}{1-v^2} \begin{bmatrix} 1 & v & 0 \\ v & 1 & 0 \\ 0 & 0 & \dfrac{1-v}{2} \end{bmatrix} \right)_{\!\Big/ k} \tag{14}$$

$$\overline{\alpha}_k = \alpha_k = \begin{bmatrix} \alpha \\ \alpha \\ 0 \end{bmatrix}_k \tag{15}$$

As reflected in Eqs. (1)-(15), the effective CTE $\alpha_l$ of laminate 10 can depend, at least in part, on the pre-consolidation stiffness and/or fiber alignment of each of the laminae, in addition to the CTEs thereof. Laminate 10 can have any suitable arrangement of laminae to render the laminate asymmetric, e.g., laminae (e.g., 14a and 14b) of the laminate can have different matrix materials, fiber types, thicknesses, fiber arrangements, fiber volume fractions, and/or the like (e.g., such that at least two of the laminae have different stiffnesses and/or CTEs) and can be arranged to yield an effective CTE $\alpha_l$, per Eq. (1), that is not equal across the midplane of the laminate.

An asymmetric laminate can, in response to a change in temperature $\Delta T$, have thermal stresses that are not equal and/or thermal moments that are not equal and opposite across the midplane, e.g.:

$$\mathbf{N_1} \neq \mathbf{N_2} \text{ and/or } \mathbf{M_1} \neq -\mathbf{M_2} \tag{16}$$

where $\mathbf{N_1}$ and $\mathbf{N_2}$ are the thermal stress resultants of the laminate's upper and lower halves, respectively, and $\mathbf{M_1}$ and $\mathbf{M_2}$ are the thermal moment resultants of the laminate's upper and lower halves, respectively. Per the relationships expressed in Eqs. (6) and (7), and where the $i$th lamina is the lamina immediately below the midplane (e.g., the lamina labeled "Lamina k" in FIG. 2):

$$\frac{\mathbf{N_1}}{\Delta T} = \sum_{k=1}^{i-1} \overline{\mathbf{Q}}_k \overline{\alpha}_k (h_k - h_{k-1}) \tag{17}$$

$$\frac{\mathbf{N_2}}{\Delta T} = \sum_{k=i}^{n} \overline{\mathbf{Q}}_k \overline{\alpha}_k (h_k - h_{k-1}) \tag{18}$$

$$\frac{\mathbf{M_1}}{\Delta T} = \frac{1}{2} \sum_{k=1}^{i-1} \overline{\mathbf{Q}}_k \overline{\alpha}_k (h_k^2 - h_{k-1}^2) \tag{19}$$

$$\frac{\mathbf{M_2}}{\Delta T} = \frac{1}{2} \sum_{k=i}^{n} \overline{\mathbf{Q}}_k \overline{\alpha}_k (h_k^2 - h_{k-1}^2) \tag{20}$$

When the midplane intersects a lamina, for the purpose of calculating Eqs. (17)-(20) the intersected lamina can be treated as two separate laminae having a boundary at the midplane, the lower of which is the *ith* lamina.

For example, each of first lamina(e) 14a, which can comprise little or no fibers, can have a higher CTE in at least one direction and/or can be less stiff than second lamina(e) 14b, which can comprise fibers that, optionally, are of the same type (e.g., carbon fibers). The laminae can be arranged such that each of first lamina(e) 14a is disposed closer to a first surface 34a of laminate 10 than to an opposing second surface 34b of the laminate, optionally such that one of the first lamina(e) defines the first surface. Additionally or alternatively, the laminae can be arranged such that each of second lamina(e) 14b is disposed closer to a second surface 34b of laminate 10 that is opposite first surface 34a than is each of first lamina(e) 14a, e.g., such that when a single first lamina 14a defines first surface 34a, all of the lamina(e) that are disposed between the first lamina and the second surface are second lamina(e) 14b. As shown, for example, laminate 10 comprises a single first lamina 14a and seven unidirectional second laminae 14b, where matrix material 22 of the first lamina is polycarbonate and the laminae are arranged in a PC, 90, 0, 0, 0, 0, 0, 90 lay-up. As a result, the fiber content, by weight, of an upper half 38a of laminate 10 disposed between the midplane and first surface 34a can be less than that of a lower half 38b of the laminate disposed between the midplane and second surface 34b. Such a laminae composition and arrangement can render upper half 38a more susceptible to shrinkage than lower half 38b in response to a decrease in temperature (e.g., one or more, optionally two or more, components of $\alpha_l$-such as effective lengthwise and/or widthwise CTEs of the laminate-can be higher at first surface 34a than at second surface 34b and, optionally, an effective shear CTE of the laminate can be substantially the same at the first and second surfaces) and, as such, laminate 10 is asymmetric. However, in other embodiments, laminate 10 can have any other suitable asymmetric arrangement of laminae; for example, the laminae of the laminate can comprise the same fiber type and matrix material, but can have different fiber alignments that render the laminate asymmetric.

Laminate 10, because it is asymmetric, can have advantageous characteristics over symmetric laminates. For example, laminate 10 can be less susceptible to warpage in an overmolding process and, when one of first lamina(e) 14a defines first surface 34a, the laminate can have improved aesthetics (e.g., from the appearance of the fiberless first lamina, which can have better aesthetics than a fiber-reinforced lamina) without having to sacrifice laminate stiffness (e.g., which might otherwise be sacrificed when incorporating an additional fiberless lamina instead of a fiber-reinforced lamina to achieve laminate symmetry). Such improved aesthetics may render laminate 10 particularly suitable for use in a housing of a portable electronic device (e.g., of a mobile phone, computer, tablet, and/or the like), where both stiffness and aesthetics may be desirable.

Unlike conventional asymmetric laminates, and due at least in part to the method by which it is made, laminate 10 can be flat, rendering it suitable for handling in subsequent processes (e.g., overmolding). As used herein, a laminate is flat where, when the laminate is resting on a horizontal surface (e.g., such that second surface 34b is disposed on the horizontal surface), a maximum distance between the horizontal surface and the laminate, measured in a direction perpendicular to the horizontal surface, is less than or equal to any one of, or between any two of, 1.4%, 1.3%, 1.2%, 1.1%, 1.0%, 0.9%, 0.7%, 0.6%, 0.5%, or less (e.g., less than or equal to 1%) of the length (e.g., 26) or width (e.g., 30) of the laminate, whichever is largest. Conventional laminate-forming processes may not produce flat, asymmetric laminates because the laminate, when cooled in those processes, may experience different shrinkage across its thickness (e.g., due to an $\alpha_l$ that varies across the laminate's thickness), yielding residual stresses that can warp the laminate even if the laminate is pressed as it is cooled. For example, a residual compressive stress may be induced in portions of the laminate where one or more components of $\alpha_l$ are comparatively higher while a residual tensile stress may be induced in portions of the laminate where one or more components of $\alpha_l$ are comparatively lower, thereby causing warpage.

A wide variety of articles can incorporate one or more of the present asymmetric laminates (e.g., 10) (e.g., via overmolding, where the asymmetric laminae configuration of each of the laminate(s) can mitigate warpage). For example, one or more laminates can be included in, without limitation, an automobile, train, boat, airplane, or the like component, an electronic device housing (e.g., a hard disk or solid state drive housing, display-such as a television or monitor-frame, radar housing, or the like), a portable electronic device housing (e.g., laptop, tablet, mobile phone, portable music player, and/or the like housing), or the like. Laminate 10 can have a sufficiently high RF-transparency (e.g., at least in part due to the fiber and matrix material composition of its laminae) to render it particularly suitable for use in articles in which RF-transparency is desirable, such as, for example, electronic device-whether or not portable-housings.

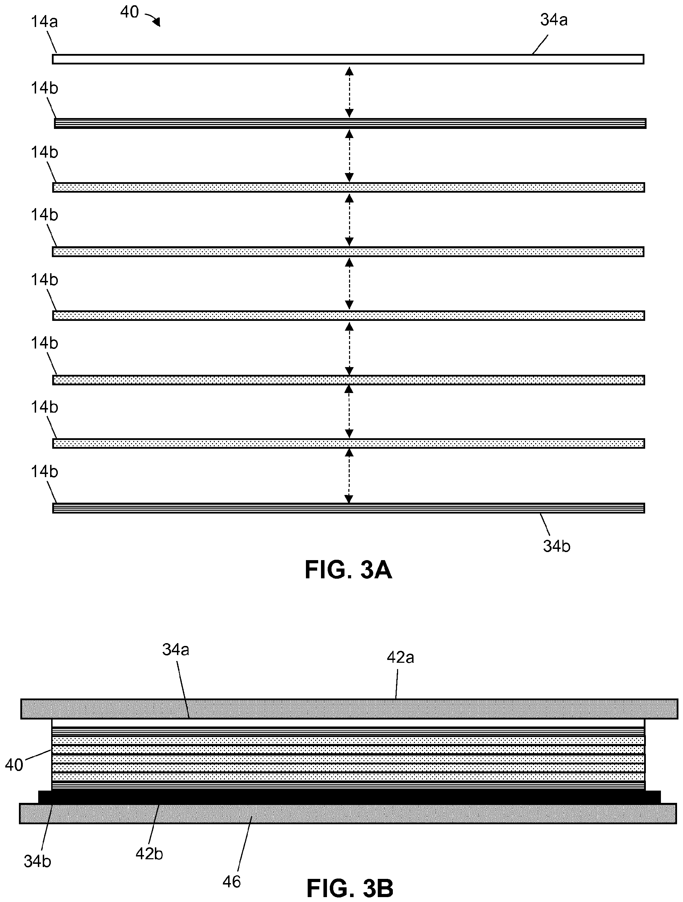

Referring to FIGs. 3A-3C, a flat, asymmetric fiber-reinforced laminate (e.g., 10) can be made in a manner that mitigates the warpage-inducing stresses attributable to the asymmetric configuration of its laminae. Some methods comprise a step of stacking two or more laminae (e.g., 14a and 14b) (FIG. 3A) and consolidating the stack (e.g., 40) of laminae to produce the laminate. The stacked laminae can be any of the laminae described above (e.g., first lamina(e) 14a and second lamina(e) 14b), and at least one of the laminae can comprise fibers (e.g., 18) dispersed within a matrix material (e.g., 22). The produced laminate can have a length (e.g., 26), a width (e.g., 30), and a thickness (e.g., 32) measured perpendicular to the length and width, such as any of those described above.

The laminae can be stacked such that the laminate is asymmetric. For example, the laminae can be stacked such that an upper one of the laminae defines a first surface (e.g., 34a), a lower one of the laminae defines a second surface (e.g., 34b) opposite the first surface, and at least one of, optionally at least two of, an effective lengthwise CTE ($\alpha_{l,x}$), an effective widthwise CTE ($\alpha_{l,y}$), and an effective shear CTE ($\alpha_{l,xy}$) of the laminate, as calculated per Eq. (1), is higher at the first surface than at the second surface. To illustrate, the laminae can be stacked such that effective lengthwise and widthwise CTEs of the laminate are higher at the first surface than at the second surface, and optionally such that an effective shear CTE of the laminate is substantially the same at the first and second surfaces (e.g., to minimize twisting). Variations in the shear CTE of the laminate can be reduced at least by arranging the second lamina(e) in a cross-ply configuration, e.g., the one or more second laminae can comprise two or more second laminae, each of the second laminae can be a unidirectional lamina, and the laminae can be stacked and arranged such that the fibers of at least one of the second laminae are aligned in a first direction and the fibers of at least one other of the second laminae are aligned in a second direction that is perpendicular to the first direction.

The stack can be consolidated at least by heating and/or applying pressure to the stack and subsequently cooling the stack. To mitigate warpage-inducing stresses that may occur when the stack is cooled, some methods comprise a step of disposing the stack between first and second supportive bodies (e.g., 42a and 42b) (e.g., before consolidation) such that the first supportive body contacts the first surface and the second supportive body contacts the second surface (FIG. 3B). The supportive bodies can have different CTEs; for example, the first supportive body can have a CTE that is less than or equal to any one of, or between any two of: 90%, 80%, 70%, 60%, 50%, 40%, 30%, 20%, or less of a CTE of the second supportive body. To illustrate, the first supportive body can be a first plate, at least a majority of which is steel, and the second supportive body can be a layer of polymeric material (e.g., polytetrafluoroethylene) that, optionally, comprises fibers (e.g., glass fibers) dispersed within the polymeric material. The first supportive body (e.g., the first plate) can have a thickness that is less than or equal to any one of, or between any two of: 20.0 mm, 15.0 mm, 10.0 mm, 5.0 mm, 3.0 mm, 2.5 mm, 2.0 mm, 1.5 mm, 1.0 mm, 0.5 mm, or 0.25 mm (e.g., less than or equal to approximately 20 mm or 2.0 mm), and the second supportive body (e.g., the polymeric layer) can have a thickness that is less than or equal to any one of, or between any two of: 20.0 mm, 15.0 mm, 10.0 mm, 5.0 mm, 3.0 mm, 1.5 mm, 0.75 mm, 0.50 mm, 0.25 mm, 0.10 mm, or less (e.g., less than or equal to approximately 20 mm or 0.50 mm). A second plate (e.g., 46) can underlie the second supportive body (e.g., to facilitate pressing, described below) and can be substantially the same as the first plate. The stack can be disposed between the supportive bodies while the stack is consolidated.

At least in part because the first and second supportive body have different CTEs, during cooling the second supportive body may experience greater shrinkage than the first supportive body. As a result, the supportive bodies may induce a residual tensile stress in an upper half (e.g., 38a) of the laminate and a residual compressive stress in a lower half (e.g., 38b) of the laminate. These stresses may at least partially counteract any residual stresses (e.g., compressive and tensile stresses in the upper and lower halves of the laminate, respectively) that result from the laminate's asymmetric laminae configuration, thereby mitigating warpage.

Additionally or alternatively, the stack can be cooled asymmetrically to mitigate warpage-inducing stresses, e.g., such that the first surface is cooled at a higher rate than the second surface. For example, the stack can be cooled such that, during the cooling, heat is transferred through the first surface at a first rate and heat is transferred through the second surface at a second rate that is less than or equal to any one of, or between any two of: 90%, 80%, 70%, 60%, 50%, 40%, 30%, or less of the first rate. Such differential cooling can induce residual tensile and compressive stresses in the upper and lower halves of the laminate, respectively, to at least partially counteract warpage-inducing stresses attributable to the asymmetric laminae arrangement.

Differential cooling can be achieved in any suitable manner. For example, if the stack is cooled while it is disposed between first and second supportive bodies, the thermal diffusivity of the second supportive body can be less than that of the first supportive body (e.g., less than or equal to any one of, or between any two of: 90%, 80%, 70%, 60%, 50%, 40%, 30%, or less of the thermal diffusivity of the first supportive body). Additionally or alternatively, the stack can be placed in thermal communication with cooling bodies that are brought to different temperatures when the stack is cooled.

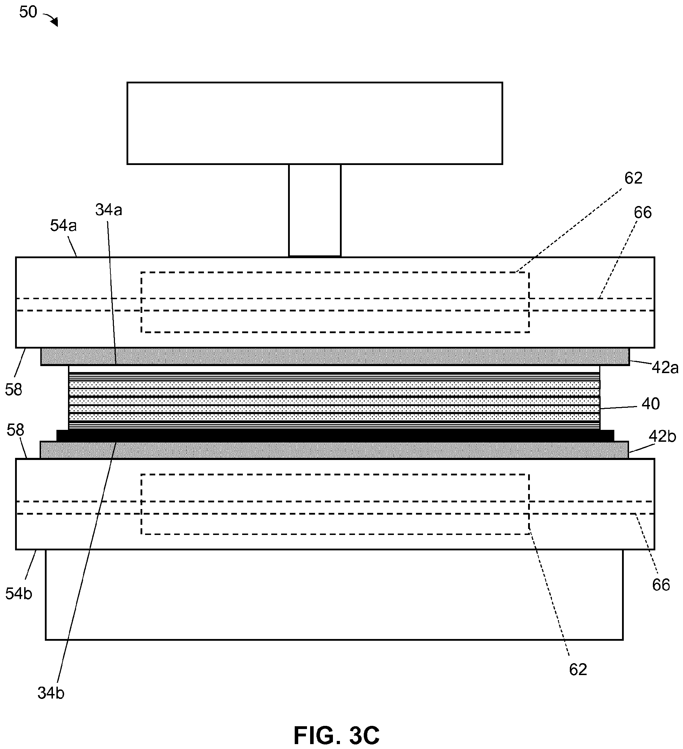

Referring to FIG. 3C, during consolidation, the stack can be pressed, heated, and/or cooled using a press (e.g., 50) that comprises first and second pressing elements (e.g., 54a and 54b). Each of the pressing elements can comprise any suitable pressing element, such as, for example, a platen, block, and/or the like, and can define a pressing surface (e.g., 58) (e.g., that can be planar, concave, and/or convex) configured to contact an object when the object is pressed by the pressing element. At least one (e.g., each) of the pressing elements can include one or more electric and/or inductive heating elements (e.g., 62) and/or one or more interior passageways (e.g., 66) through which heating and/or cooling fluid (e.g., water, steam, a thermal fluid, and/or the like) can be passed to change the temperature of the pressing element. The press can include one or more actuators (e.g., hydraulic, electric, and/or pneumatic actuator(s)) configured to move the pressing elements relative to one another to press an object disposed therebetween.

To consolidate the stack, some methods comprise pressing the stack between the first and second pressing elements (e.g., by pressing the first and second supportive bodies-if used-between the pressing elements). The second plate can underlie the second supportive body while the supportive bodies are pressed (e.g., such that the first and second plates are pressed between the first and second pressing elements) to facilitate pressing.

The stack can be heated while disposed between the pressing elements at least by increasing a temperature of at least one of the pressing elements. For example, to heat the stack, at least one of the pressing elements can be heated such that a temperature of the pressing element during the heating is greater than or equal to any one of, or between any two of: 140 °C, 150 °C, 160 °C, 170 °C, 180 °C, 190 °C, 200 °C, 210 °C, 220 °C, 230 °C, 240 °C, 250 °C, 260 °C, 270 °C, 280 °C, 290 °C, 300 °C, 310 °C, 320 °C, 330 °C, 340 °C, 350 °C, 360 °C, 370 °C, 380 °C, 390 °C, 400 °C, or more (e.g., between 200 and 300 °C). The pressing elements can also apply pressure to the stack, such as, for example, a pressure that is greater than or equal to any one of, or between any two of: 1, 5, 10, 15, 20, 25, 30, 35, 40, or more bar gauge (e.g., between 1 and 40 or 13 and 20 bar gauge).

To cool the stack, a temperature of at least one of the pressing elements can be less than that of the heated stack, such as, for example, less than or equal to any one of, or between any two of: 10 °C, 15 °C, 20 °C, 25 °C, 30 °C, 35 °C, 40 °C, 45 °C, 50 °C, 55 °C, 60 °C, 65 °C, 70 °C, 75 °C, 80 °C, 85 °C, 90 °C, 95 °C, 100 °C, or less (e.g., between 10 and 100 °C or between 20 and 30 °C, which can be room temperature). The pressing elements can have different temperatures to asymmetrically cool the stack. For example, during the cooling, a temperature of the first pressing element can be less than or equal to any one of, or between any two of: 90%, 80%, 70%, 60%, 50%, 40%, 30%, or less of a temperature of the second pressing element (e.g., such that the rate of heat transfer is greater through the first surface than through the second surface). And, pressing can be performed such that the first supportive body, which can have a higher thermal diffusivity than the second supportive body, is disposed closer to the first pressing element than is the second supportive body, which may promote a faster cooling rate at the first surface than at the second surface. Pressing, heating, and/or cooling the stack in this manner can mitigate warpage-inducing stresses to produce a flat laminate.

## EXAMPLES

The present invention will be described in greater detail by way of specific examples. The following examples are offered for illustrative purposes only and are not intended to limit the invention in any manner. Those of skill in the art will readily recognize a variety of noncritical parameters that can be changed or modified to yield essentially the same results.

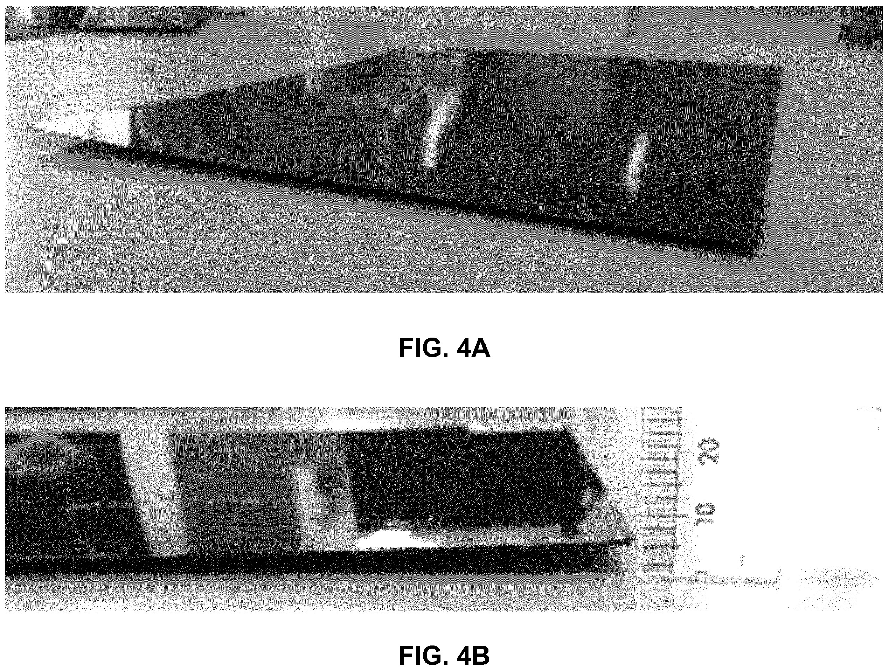

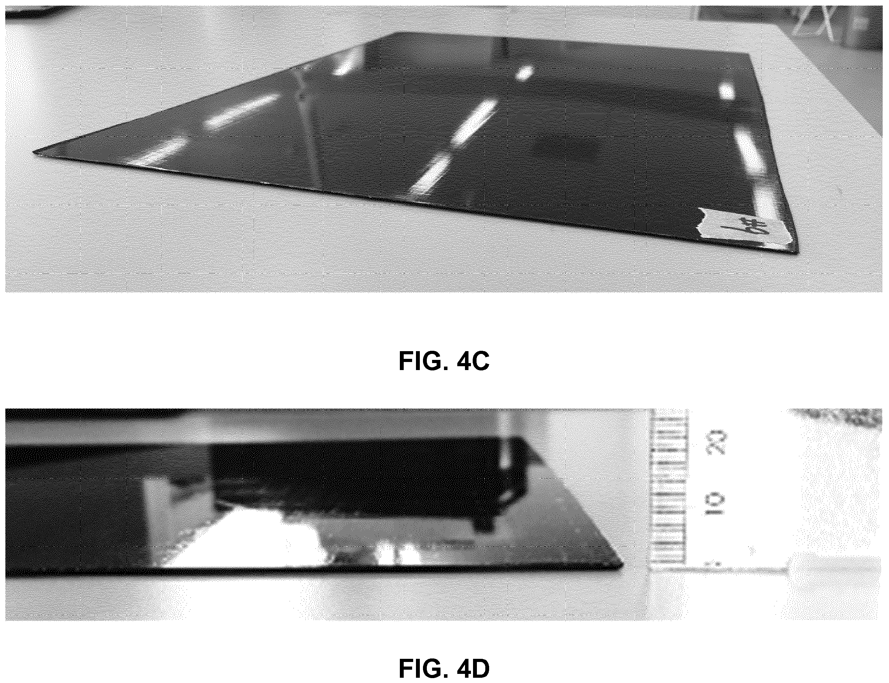

Referring to FIGs. 4A-4D, two asymmetric fiber-reinforced laminates were made: (1) a first laminate made according to a conventional process (FIGs. 4A and 4B), and (2) a second laminate made according to one of the present methods (FIGs. 4C and 4D). Each of the laminates had a 50 $\mu$m-thick polycarbonate lamina and seven carbon fiber-reinforced unidirectional laminae arranged in a PC, 90, 0, 0, 0, 0, 0, 90 lay-up. To make the first laminate, the laminae were stacked and disposed between two 2 mm-thick metal plates such that its upper and lower laminae each contacted one of the plates. To make the second laminate, the stack of laminae was disposed between a first metal plate and a glass fabric-reinforced TEFLON™ sheet overlying a second metal plate such that the polycarbonate lamina contacted the first metal plate and the lower carbon fiber-reinforced lamina contacted the TEFLON™ sheet. Each of the first and second metal plates had a thickness of 2 mm, and the TEFLON™ sheet had a thickness of 0.45 mm. For each of the laminates, the stack was consolidated at least by heating the stack to a temperature of 250 C and thereafter cooling the stack to room temperature. The first laminate was symmetrically cooled, while the second laminate was cooled asymmetrically such that the rate of cooling at the surface defined by the polycarbonate lamina was higher than that at the surface defined by the lower carbon fiber-reinforced lamina.

The first asymmetric laminate, because it experienced different shrinkage across its thickness during the cooling process, was warped such that the average deflection of its corners was 3.5 mm (FIGs. 4A and 4B). By contrast, the second asymmetric laminate, at least in part because it was made using different supportive bodies and asymmetric cooling, was flat.

The above specification and examples provide a complete description of the structure and use of illustrative embodiments. Although certain embodiments have been described above with a certain degree of particularity, or with reference to one or more individual embodiments, those skilled in the art could make numerous alterations to the disclosed embodiments without departing from the scope of this invention. As such, the various illustrative embodiments of the methods and systems are not intended to be limited to the particular forms disclosed. Rather, they include all modifications and alternatives falling within the scope of the claims, and embodiments other than the one shown may include some or all of the features of the depicted embodiment. For example, elements may be omitted or combined as a unitary structure, and/or connections may be substituted. Further, where appropriate, aspects of any of the examples described above may be combined with aspects of any of the other examples described to form further examples having comparable or different properties and/or functions, and addressing the same or different problems. Similarly, it will be understood that the benefits and advantages described above may relate to one embodiment or may relate to several embodiments.

The claims are not intended to include, and should not be interpreted to include, means-plus- or step-plus-function limitations, unless such a limitation is explicitly recited in a given claim using the phrase(s) "means for" or "step for," respectively.

**Claims**

1. A method of making a fiber-reinforced laminate, the method comprising:

stacking two or more laminae such that an upper one of the laminae defines a first surface of the laminate and a lower one of the laminae defines a second surface of the laminate that is opposite the first surface, wherein at least one of the laminae comprises fibers dispersed within a matrix material; and consolidating the stack of laminae to produce the laminate at least by:

heating the stack; and
cooling the stack such that, during the cooling, heat is transferred through the first surface at a first rate, and heat is transferred through the second surface at a second rate that is less than or equal to 90% of the first rate;

wherein stacking the laminae is performed such that the laminate is asymmetric.

2. The method of claim 1, comprising:

disposing the stack between first and second supportive bodies such that:

the first supportive body contacts the first surface; and
the second supportive body contacts the second surface;

wherein consolidating the stack comprises pressing the supportive bodies between first and second pressing elements of a press.

3. The method of claim 2, wherein a thermal diffusivity of the second supportive body is less than or equal to 90% of a thermal diffusivity of the first supportive body.

4. The method of any of claims 2-3, wherein:

pressing the supportive bodies is performed such that the first supportive body is disposed closer to the first pressing element than is the second supportive body; and
during cooling of the stack, a temperature of the first pressing element is less than or equal to 90% of a temperature of the second pressing element.

5. A method of making a fiber-reinforced laminate, the method comprising:

stacking two or more laminae such that an upper one of the laminae defines a first surface of the laminate and a lower one of the laminae defines a second surface of the laminate that is opposite the first surface, wherein at least one of the laminae comprises fibers dispersed within a matrix material;
disposing the stack between first and second supportive bodies such that the first supportive body contacts the first surface and the second supportive body contacts the second surface, the first supportive body having a coefficient of thermal expansion (CTE) that is less than or equal to 90% of a CTE of the second supportive body; and
consolidating the stack to produce the laminate at least by:

pressing the supportive bodies between first and second pressing elements of a press;
heating the stack; and
cooling the stack.

6. The method of any of claims 2-5, wherein:

the first supportive body is a first plate;

the second supportive body is a layer of polymeric material; and

during pressing of the supportive bodies, a second plate underlies the second supportive body such that the first and second plates are pressed between the first and second pressing elements.

7. The method of claim 6, wherein:

at least a majority, by weight, of each of the first and second plates is steel;
fibers are dispersed within the polymeric material of the second supportive body; and
the polymeric material is polytetrafluoroethylene.

8. The method of any of claims 1-7, wherein:

the two or more laminae comprise:

one or more first laminae, wherein at least 90%, by weight, of each of the first lamina(e) is a matrix material; and
one or more second laminae, each comprising fibers dispersed within a matrix material; and

stacking the laminae is performed such that:

each of the first lamina(e) is disposed closer to the first surface than to the second surface; and
each of the second lamina(e) is disposed closer to the second surface than is each of the first lamina(e).

9. The method of claim 8, wherein stacking the laminae is performed such that one of the first lamina(e) defines the first surface.

10. The method of any of claims 8-9, wherein:

the one or more second laminae comprise two or more second laminae;
each of the second laminae is a unidirectional lamina; and
stacking is performed such that the fibers of at least one of the second laminae are aligned in a first direction and the fibers of at least one other of the second laminae are aligned in a second direction that is perpendicular to the first direction.

11. The method of any of claims 1-10, wherein:

the laminate has a length and a width; and
stacking the laminae is performed such that:

an effective lengthwise CTE of the laminate is higher at the first surface than at the second surface;
an effective widthwise CTE of the laminate is higher at the first surface than at the second surface; and/or
an effective shear CTE of the laminate is higher at the first surface than at the second surface.

12. The method of claim 11, wherein stacking the laminae is performed such that:

an effective lengthwise CTE of the laminate is higher at the first surface than at the second surface;
an effective widthwise CTE of the laminate is higher at the first surface than at the second surface; and
an effective shear CTE of the laminate is substantially the same at the first and second surfaces.

13. A fiber-reinforced laminate comprising:

two or more laminae, at least one of the laminae comprising fibers dispersed within a matrix material;
wherein the laminate is asymmetric and flat.

14. The laminate of claim 13, wherein:

the laminate comprises opposing first and second surfaces;
an effective lengthwise CTE of the laminate is higher at the first surface than at the second surface;

an effective widthwise CTE of the laminate is higher at the first surface than at the second surface; and
an effective shear CTE of the laminate is substantially the same at the first and second surfaces.

15. The laminate of claim 13 or 14, wherein:

the laminate comprises opposing first and second surfaces; and
the two or more laminae comprise:

one or more first laminae, wherein at least 90%, by weight, of each of the first lamina(e) is a matrix material; and
one or more second laminae, each comprising fibers dispersed within a matrix material;
wherein one of the first lamina(e) defines the first surface.

10

22

34a

14a

1C

1C

**FIG. 1A**

10

14b

18

22

34b

30

26

**FIG. 1B**

**FIG. 1C**

**FIG. 1D**

**FIG. 2**

**FIG. 3A**

**FIG. 3B**

17

50

34a
54a
62
66

58

42a
40
58
42b

54b

66

62

34b

**FIG. 3C**

FIG. 4A

FIG. 4B

FIG. 4C

FIG. 4D

## EUROPEAN SEARCH REPORT

Europäisches Patentamt
European Patent Office
Office européen des brevets

**Application Number**

EP 19 17 9258

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2018/167577 A1 (SABIC GLOBAL TECHNOLOGIES BV [NL]) 20 September 2018 (2018-09-20) * paragraph [0065] - paragraph [0144] * * figures 1, 11, 21-24 * | 1-15 | INV. B32B33/00 B32B37/14 B32B37/08 |
| X | WO 03/026821 A1 (GERHARD JACK K [US]; LYNAM ERIC J [US] ET AL.) 3 April 2003 (2003-04-03) | 1-4, 13-15 | |
| A | * page 7, line 11 - page 14, line 15 * * figures 2-5 * | 5-12 | |
| A | WO 2019/030740 A1 (FIBRE REINFORCED THERMOPLASTICS B V [NL]) 14 February 2019 (2019-02-14) * paragraphs [0055], [0071] * * figures 1-4, 7, 8C * | 1-15 | |

**TECHNICAL FIELDS SEARCHED (IPC)**

B32B
B29C

The present search report has been drawn up for all claims

| Place of search | Date of completion of the search | Examiner |
|---|---|---|
| Munich | 17 December 2019 | Bataille, Laurent |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 19 17 9258

The Search Division considers that the present European patent application does not comply with the
requirements of unity of invention and relates to several inventions or groups of inventions, namely:

    1. claims: 1-4

        Method of making fiber-reinforced laminate with heat
        transfer at particular rates during cooling
                        ---

    2. claims: 5-15

        Method of making fiber-reinforced laminate using supportive
        bodies with particular CTEs
                        ---

## ANNEX TO THE EUROPEAN SEARCH REPORT
## ON EUROPEAN PATENT APPLICATION NO.

EP 19 17 9258

This annex lists the patent family members relating to the patent documents cited in the above-mentioned European search report.
The members are as contained in the European Patent Office EDP file on
The European Patent Office is in no way liable for these particulars which are merely given for the purpose of information.

17-12-2019

| Patent document cited in search report | | Publication date | Patent family member(s) | | Publication date |
|---|---|---|---|---|---|
| WO 2018167577 | A1 | 20-09-2018 | NONE | | |
| WO 03026821 | A1 | 03-04-2003 | US | 2003062118 A1 | 03-04-2003 |
| | | | US | 2006013913 A1 | 19-01-2006 |
| | | | WO | 03026821 A1 | 03-04-2003 |
| WO 2019030740 | A1 | 14-02-2019 | NONE | | |

EPO FORM P0459

For more details about this annex : see Official Journal of the European Patent Office, No. 12/82